# EUROPEAN PATENT APPLICATION

(11) **EP 0 827 685 A2**
(43) Date of publication of application: **11.03.1998**
(21) Application number: 97306851.3
(22) Date of filing: 04.09.1997
(51) Int. Cl.: A01D 45/24

(54) **Arrangements for harvesting legumes**

(30) Priority: 04.09.1996 GB 9618383
(71) Applicant: PIXALL LIMITED PARTNERSHIP, Clear Lake, WI 54005-8400 (US)
(72) Inventor: Davenport, Graham, Grimsby, DN32 9PY (GB)
(74) Representative: Loven, Keith James

(57) **Abstract**

The present disclosure is directed to new arrangements for harvesting legume crops. As used herein, legume crops include plants which grow seeds within a pod or pericarp. The new arrangements of the invention can be used alone, in combination with each other, or in combination with known arrangements. The harvesting arrangements disclosed herein include new gathering arrangements (351) for removing the crop from the field, and new threshing arrangements for opening legume pods, and, in some embodiments, for separating the legume seed from the remainder of the plant material. The threshing arrangements include one or more threshing apparatuses (352, 353). The threshing apparatuses (352, 353) function to open the pods of a leguminous plant by compressing the pods between two or more threshing surfaces which exert sufficient pressure on the plant material to open the pods. The threshing surfaces can also move at different speeds to cause additional compression and shear affect on the pods to enhance pod opening.

## Description

### Field of the Invention

The present disclosure is directed to new arrangements for harvesting legume crops. Specifically, the invention provides harvesting machinery including new gathering and threshing arrangements for removal of legumes from the field and separation of the legume seed from waste crop material.

### Background of the Invention

A conventional legume harvesting machine, for example, a pea harvester, is self-propelled. In general, a self-propelled harvester typically includes a chassis upon which is mounted a drive engine, operator's cab, component operating system (e.g.. hydraulic system) and harvesting components to pick-up, thresh and clean legumes while moving through a crop field.

Components which are generally present on a harvester include, for example, a "gathering arrangement" to pick-up or strip the crop, a "thresher" to thresh and clean the crop, and a crop storage bin or hopper to store the cleaned seed during operation of the combine. In addition, a harvester typically also includes various conveyor belts, draper belts, lifting belts, fans, motors and other devices to facilitate gathering, cleaning, and moving crop through the harvester.

In typical operation of a harvester, the crop is removed from the field by the gathering arrangement. Conventional gathering arrangements have been referred to as "strippers", "headers", "heads" etc. Conventional arrangements for gathering the crop from the field often bring a large amount of non-pod plant material into the harvester, much of it which can remain with the final product. In addition, oftentimes, leguminous plants, such as peas and various beans, grow as vine like structures close to the ground. Weather conditions including wind and rain can further affect the "lay" of the crop in the field. This stature of the plant at harvesting time can slow harvesting due to inefficient and often times redundant movement of the harvester as it manoeuvres through the "maze" created by the natural growth of the crop to head the crop. That is, due to the "lay" of the crop, often times during harvesting, the harvester can only approach the crop from limited directions. The limited direction from which the crop can be approached can cause harvesting inefficiency due to the lack of harvesting occurring while repositioning the harvester into a direction for harvesting which is suitable for the lay of the crop. Once picked up from the field, the plant material is typically passed into a large perforate rotating drum in which is mounted an axially extending rotor surrounded by multiple beaters rotating at a higher speed than the drum. The plant material is carried by centrifugal force up the inner surface of the drum to the top of the drum and then caused to drop onto the rotor, where the percussive impact of the beaters causes the pods to split. The peas are released and pass through the perforated drum wall for collection below by conveyors. The waste plant material is then discharged.

As the plant material rotates along the drum from the input end to the discharge end, the cycle of lifting, dropping and beating occurs several more times. The remaining pods and waste become more chopped and broken, rendering the material small enough to pass through the perforations (mesh) of the drum walls. Typically, 75% of the peas are discharged in the first half of the drum's length, while the remaining 25% come through in the second half. Since waste material is also increasingly discharged with the peas along the length of the drum, it has been found that, for every 1000kg of peas produced, up to 600kg of waste is also discharged with the desired crop, requiring further separation in subsequent processing.

In order to achieve a satisfactory degree of separation of the peas from the pods, it is necessary to make the drum large, both in length and in diameter. It is also necessary to maintain the long axis of the drum as near to horizontal as possible during operation, to ensure that the plants are dropped onto the rotor at the right point for percussive impact to cause bursting of the pods. A typical machine of this type will therefore be very large and heavy, since it generally requires a two-part chassis, with hydraulic levelling rams between the two parts. Not only is the machine very expensive to build and to operate, but the weight causes compaction of the ground, making future cultivation more difficult.

A further problem with this type of machine is that the impact of the beaters on the rotor with the pods can cause damage to the peas, reducing the quality and therefore value of the crop.

Accordingly, there is a need for improvement of harvesters and components thereof. There is a need for equipment which requires reduced initial capital investment and reduced operational costs. Operational costs not only includes the cost of operating and maintaining the equipment, but also, costs incurred due to operating the machine, for example field maintenance costs. Moreover, there is a need to increase the efficiency of opening pods and separating the seed from the remainder of the plant material and to enhance the quality and cleanliness of the harvested product.

A machine for vining peas and the like which attempts to overcome some of these problems is described in European Patent Application number 96301399.0.

### Summary of the Invention

It is noted that several places throughout the specification guidance is provided through examples. In each instance, the recited examples serve only as a representative group. It is not meant, however, that the examples are exclusive.

### Brief Description of the Drawings

FIG. 1 is a side elevational view of one embodiment of a harvester according to the present disclosure.

FIG. 2 is a side elevational view of one embodiment of a picking reel according to the present disclosure.

FIG. 3 is a front elevational view of one embodiment of a picking reel according to the present disclosure.

FIG. 4 is a front elevational view of one embodiment of a picking reel according to the present disclosure.

FIG. 5 is a side elevational view of one embodiment of a first stage threshing apparatus according to the present disclosure.

FIG. 6 is a top elevational view of the embodiment of a first stage threshing apparatus of FIG. 5.

FIG. 7 is a front elevational view of the embodiment of a first stage threshing apparatus of FIG. 5.

FIG. 8 is a perspective view of one embodiment of a first stage threshing apparatus according to the present disclosure.

FIG. 9 is a diagrammatic side elevation view of the embodiment of a first stage threshing apparatus of FIG. 8.

FIG. 10 is a diagrammatic representation of a view inside the drum of a second stage threshing apparatus, viewed from the egress end of the drum, as described in the present disclosure.

FIG. 11 is a perspective view of a rotor of a second stage threshing apparatus according to the present disclosure.

FIG. 12 is a rear elevational view of one embodiment of a harvesting machine including a second stage threshing apparatus according to the present disclosure.

FIG. 13 is a side elevational view of a mobile mounting arrangement for a rotor of a second stage threshing apparatus. The viewer is looking into the egress end of the drum.

FIG. 14 is a front elevational view of the mobile mounting arrangement for a rotor of the second stage threshing apparatus shown in FIG. 13.

FIG. 15 is a front elevational view of one embodiment of a second stage threshing apparatus, including a mobile mounting arrangement, according to the present disclosure.

FIG. 16 is a diagrammatic representation of an embodiment of a hydraulic circuit of a pressure control system of the present disclosure.

FIG. 17 is a side elevational view of a threshing arrangement in the form of a harvester, including a first and second stage threshing apparatus as disclosed herein.

FIG. 18 is a front elevational view of one embodiment of a second stage threshing apparatus within a drum support frame.

FIG. 19 is a perspective view of an embodiment of a drum support frame according to the present disclosure.

### Detailed Description of the Invention

The present application is directed to harvesting leguminous plants, that is, plants which grow seeds within a pod or pericarp. The disclosure includes new gathering arrangements for removing a leguminous crop from the field, and new threshing arrangements for opening a legume pod and separating the seed from other plant material. Examples of leguminous plants according to the disclosure, include, for example, peas, habas beans, broad beans, and lima beans.

The new arrangements can be used alone, in combination with each other, or in combination with known arrangements or new arrangements which are developed. Generally, arrangements are suitable for use on a crop combine or harvester. Harvesters can be self propelled or towed by a tractor. Preferred and advantageous features of gathering arrangements disclosed include, for example, increased efficiency of harvester travel, reduced damage to the seed, and decreased volume of non-pod plant material removed from the field.

Once picked-up from the field, the plant material is typically moved from the gathering arrangement and through the harvester for threshing and cleaning of the crop. Material handling systems for moving crops within a harvester are known and include, for example, conveyor belts, augers, cross conveyers, etc.

Some of the new threshing arrangements disclosed herein operate to open the pod, other arrangements operate to open the pod and separate the seed from the remainder of the plant material (e.g.., pod, stem, leaves, etc.). As used herein, the term "thresh" and derivatives thereof refer to the opening of the legume pod. Upon opening of the pod, the seed may be released or some further type of vibrational, frictional or impact force can be used to separate the seed from the opened pod. The process of opening the pod and separating the seed from the remainder of the plant material may be referred to as "vining". Hence, some of the arrangements which open pods and separate seeds from the other plant material may be referred to as a "vining machine".

The present threshing arrangements can include one or more threshing apparatuses. According to the invention, a threshing apparatus functions, in part, to open the pods of a leguminous plant by compressing the pods between two or more "threshing surfaces" which exert sufficient pressure to open the pods. In addition, during operation of the apparatus, the threshing surfaces can move at different speeds to cause additional compression and a shear affect on the pods to enhance pod opening. The threshing arrangements disclosed are particularly advantageous for opening pods which are contained within other plant material.

In some arrangements, impact can cause some pod opening due to the presence of moving devices which can be present to facilitate separation of the seed from the opened pod and move the seed out of the threshing apparatus. Moreover, some impact opening of pods is inherent when pods are exposed to rotating machinery components. However, by increasing the number of pods which are opened by compression or shear effect, rather than impact, the arrangements disclosed herein, preferably, yield a consistently higher percentage of undamaged, clean legume seeds than conventional systems. In some arrangements disclosed, the percent of pods opened by impact is less than 50%. Indeed, in some arrangements, less than 35% of the pods are opened by impact.

In one preferred embodiment of the invention, a "double," or "two stage," threshing arrangement is provided. According to one embodiment, the two stage threshing arrangement is a harvester that is reduced in weight and more cost efficient to operate in comparison to known legume harvesters, and consistently provides increased yields of clean, undamaged legume seeds.

The new and advantageous features of the present arrangements will be described by reference to components of a self-propelled harvester.

### I. GATHERING ARRANGEMENTS

A "gathering arrangement" removes the crop from the field. Various known gathering arrangements or headers which are suitable for gathering a legume crop from the field can be included in a harvester disclosed herein. Suitable headers include, for example, conventional pea or green bean headers. However, new "gathering arrangements" disclosed herein, provide unique and advantageous features for removing plant material from the field. As used herein, "plant material" removed from a field generally includes all parts of the plant including pod, seed, stems and leaves. Typically, the plant material is not cut from the field, but rather, it is "stripped". Ideally, stripping the plant from the field preferentially removes the pods from the remainder of the plant to reduce the amount of non-pod plant material moving through the harvester.

In a preferred embodiment, a gathering arrangement of the invention can increase the efficiency of a harvester by reducing the amount of plant material gathered from the field or by allowing the harvester to approach the crop from more directions, or both. In some embodiments, a gathering arrangement of the invention provides up to a 40% reduction in the intake of non-pod plant material as compared to known arrangements.

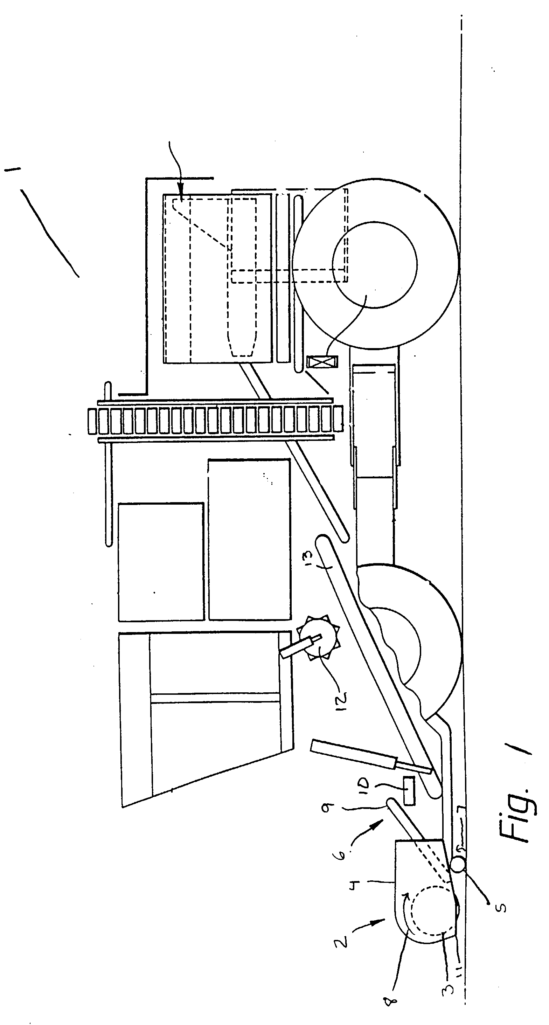

FIG. 1, illustrates one embodiment of a harvester 1. Generally, a gathering arrangement 2 is mounted on the front end of the harvester. A gathering arrangement typically includes, a picking reel 3, picking reel cover 4 (concave), ground roller 5, crop intake feeder 6, and a component control system (not shown) for controlling the speed or position of the components of the gathering arrangement. In a typical arrangement, during operation, the ground roller 5 rolls along the ground in a forward direction (as shown by arrow 7) at a speed faster than the travel speed of the harvester to reduce build-up of dirt, mud, or other debris on the ground roller. The picking reel 3 rotates in a direction for gathering the crop into the harvester (arrow 8). When the harvester 1 is moving forward, and the gathering arrangement 2 is mounted on the front end, typically the picking reel 3 is rotating in the opposite direction of the ground roller. The crop intake feeder 6 can include one or more conveyor belts 9 and 10, or other material handling system to move plant material away from the gathering arrangement into the harvester.

The picking reel cover 4 covers the picking reel and facilitates directing the gathered crop into the harvester. Generally, the height of the leading edge 11 of the picking reel cover 4 is adjustable.

In one embodiment, the picking reel is an enclosed cylindrical body with one or more longitudinally extending blades protruding radially from the surface of the cylindrical body. Attached to and extending further radially from the blades, can be multiple "fingers" spaced along the longitudinal aspect of the blade for stripping of the plant material. Hence, when viewing the reel from one end (i.e. profile view) it has the appearance of paddles around a paddle wheel, with extending fingers. As used herein, "enclosed cylindrical body" means that the external wall of the reel is constructed to substantially prevent seed or plant material from entering the inside of the cylindrical body. The external surface of the cylindrical body can be prepared from known materials, for example, steel, aluminium, alloys or synthetic materials including plastics, carbon fibre materials, etc. In one embodiment, the external surface of the cylindrical body of the picking reel is 12 ga. steel.

Typically about 6-14 longitudinal blades are spaced around the circumference of the reel. The blades can also provide for attachment of the fingers. Without intending to be limited to a single theory, it is believed that, when the picking reel is rotating, one function of the blades is to create a lift effect on the plant to facilitate lifting and stripping of the plant by the fingers.

The length of the cylindrical reel can vary. In some arrangements, the picking reel length is determined by the spacing of the wheels of the gathering arrangement. Regulatory compliance for transport can also affect the dimensions of a component. A suitable length for the picking reels disclosed herein is that of conventional reels, about 100 to 200 inches, typically about 150 inches.

As with length, various factors can affect the diameter of a picking reel. The diameters of conventional reels are suitable for the reels disclosed herein. Generally, the diameter of the disclosed external reel surface excluding blades is about 16 to 25 inches, typically about 22 inches. The width of the blade (i.e. from external reel surface to outer edge) can be about 2 to 5 inches, typically about 3 inches. Hence, the diameter of the reel as measured from blade tip to blade tip can be about 20 to 35 inches, typically about 28 inches. The fingers can extend above the tip of the blade (i.e. away from the external surface) about 1 inch to about 4 inches, typically about 2 inches. Accordingly, the diameter of the reel from finger tip to finger tip is about 24 inches to 43 inches, typically about 32 inches.

The fingers can be positioned along the length of the blade with about a 2-6 inch spacing, preferably about 4 inches therebetween. The fingers of alternating blades are generally offset such that the fingers of one blade line up about equidistant between the fingers of an adjacent blade. The fingers can be any flexible material suitable for function on the reel. Examples of suitable material include solid rubber, silicon, hollow rubber (e.g.. garden hose), combinations of rubber and steel, etc.

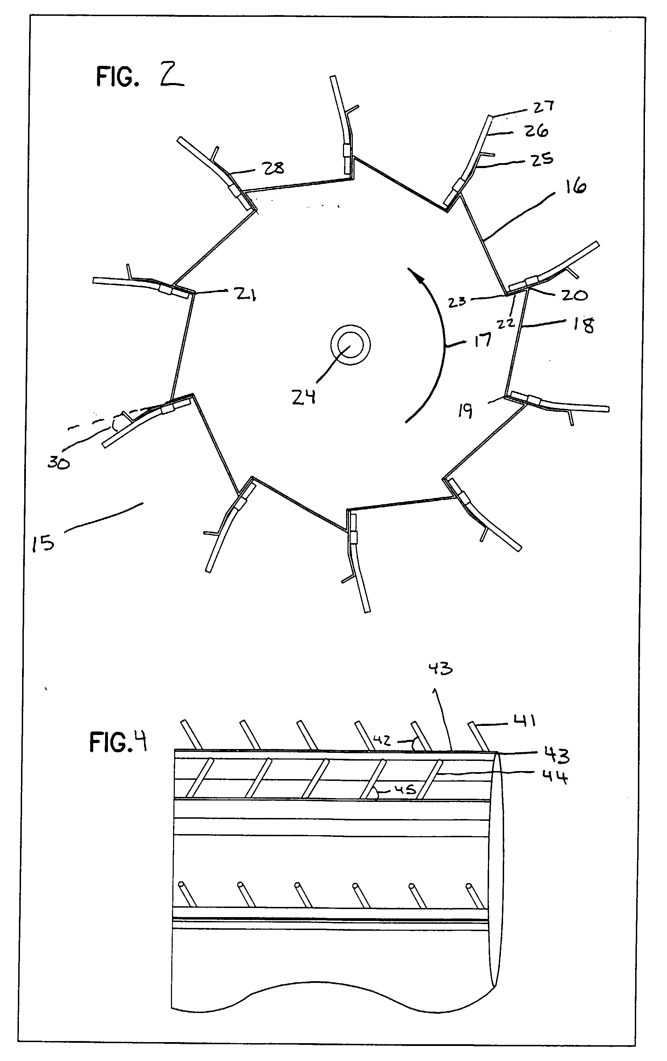

Referring now to FIG. 2, FIG. 2 is a side elevational view of one embodiment of a picking reel 15 according to the disclosure. In this embodiment, the external reel surface 16 has a "saw-toothed" appearance when the reel is viewed from the side. The direction of rotation of the reel, during use, is illustrated by arrow 17. According to this embodiment, each of the teeth 18 has a base 19 and a tip 20. The diameter of the illustrated picker reel from tooth base 19 to tooth base 21 is about 22 inches. The "flat edge" of the tooth 22 extending from the level of the base 23 of one tooth to the tip of the next tooth 20 is generally perpendicular to the rotational axis 24 of the reel 15. The flat edge 22 of the teeth illustrated in FIG. 2 is about 1.5 inches in height. It is foreseen that the flat edge of the tooth can provide the effect of a blade.

However, in the illustrated embodiment, increased height of the blade from the surface of the reel is provided by use of a finger mounting plate 25. According to the embodiment shown, the finger mounting plate 25 extends the length of the reel. The finger mounting plate attaches to the flat edge 22 of the tooth 18 and extends about 1.5 to 3 inches beyond the tip 20 of the tooth. The finger mounting plate 25 can mount to the flat edge of the teeth using known methods such as screw type fasteners or welding. The fingers 26 are mounted to the finger mounting plate 25 and extend about 2 inches beyond the finger mounting plate 25, away from the rotational axis 24 of the reel. The end of the finger farthest from the reel axis is the "finger tip" 27. The fingers 26 can be mounted to the finger mounting plate using, for example, U clamps and screw type fasteners. According to one embodiment, the fingers are 3/4 inch cylindrical rubber. In the embodiment shown, there are ten "saw teeth". The diameter of the illustrated embodiment from finger tip to finger tip is about 32 inches.

In one embodiment, as illustrated in FIG. 2 the fingers can be angled 30, relative to the flat edge of the tooth 22, about 0 to 30 degrees, typically about 15 degrees, in the direction the reel travels, arrow 17, during operation. Because the finger mounting plate affects the angle of the flexible finger, the angle of the finger can be obtained by making a bend 28, along the length of the finger mounting plate at the desired finger angle.

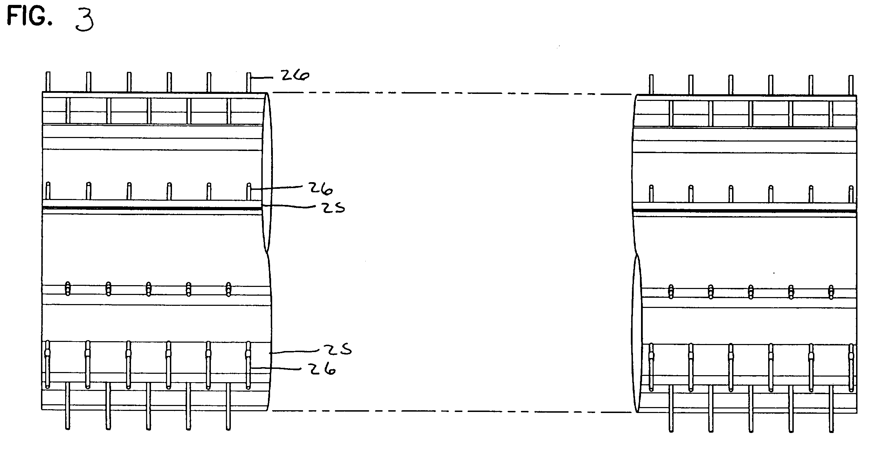

Referring now to FIG. 3, in a presently preferred embodiment, the fingers 26 are mounted along the finger mounting plate 25, with about 4 inches between the centre of each finger. As shown in FIG. 3, the same spacing is maintained between fingers of adjacent rows but the fingers are offset from those in the adjacent row. The offset is repeated throughout such that the fingers of alternating blades are in the same alignment.

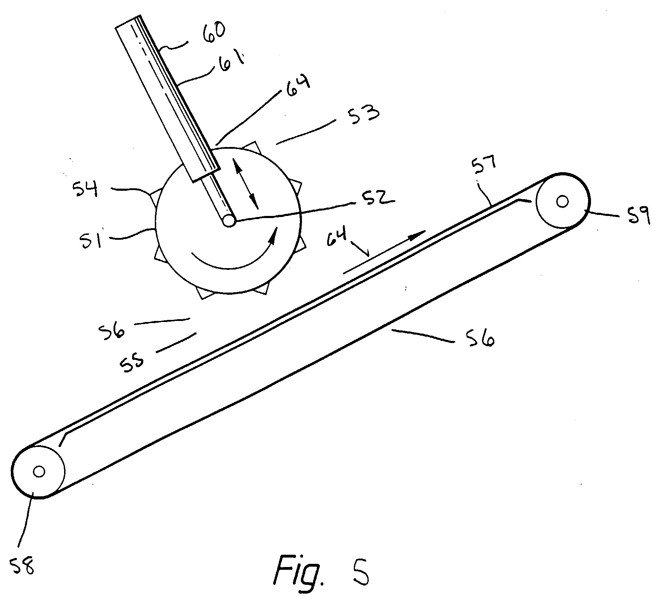

In another embodiment, illustrated in FIG. 4, the fingers 41 can be mounted at an angle 42, relative to the finger mounting plate 43 of about 45-60 degrees, preferably about 45 degrees. According to the illustrated embodiment, fingers of adjacent rows 44 can be angled 45 in opposite directions.

When harvesting crops, it can be advantageous to have the picking reel maintain a parallel picking window relative to the ground. Systems for this are known. It is foreseen that such systems can be used with gathering arrangements disclosed herein.

As the picking reel rotates, the gathered plant material is rotated under the picking reel cover to a crop intake feeder such as a cross conveyor or an auger located in the gathering arrangement. The cross conveyor then moves the plant material to an intake conveyor belt or auger. The intake conveyor can be located at the centre of the gathering arrangement and carries the plant material from the gathering arrangement into the harvester.

### II. THRESHING ARRANGEMENTS

Plant material picked up by the gathering arrangement can be moved from the gathering arrangement, via an intake belt, to the "threshing arrangement." As used herein, a "threshing arrangement" refers to an arrangement which will thresh a crop, that is, open a pod for release of the seed. One aspect of the present invention is the discovery that the cycle of pod opening in some conventional harvesting machines, which open pods by percussive impact, may sporadically change. At these times, the intended percussive affect of the beaters on the pods of conventional harvesters is diminished because of the increased mass of plant material in the drum. During these times, it is believed that pod opening increasingly occurs as a result of unintended compression of plant material between the rotor and the drum wall. Unlike these conventional harvesters, in the present invention, use of compressive force is not unintentional but rather, it is the predominant force.

According to the present disclosure, a threshing arrangement includes a threshing apparatus which opens a legume pod by exerting a compressive force, a shear force or both, on the pod with or without other plant material present. Without intending to limit the invention, it is believed that the compression or shear force exerted on the pod causes air trapped inside to expand and "burst" the pod open along its seam. Because the amount of air within a pod can vary with the size and maturity of the legume, the pressure necessary to effect pod opening can also vary.

A threshing arrangement can include one or more threshing apparatuses. In one embodiment, a threshing arrangement is disclosed which includes two threshing apparatuses. As will be discussed herein, this "two-stage" threshing arrangement provides significant advantages over conventional systems. According to this embodiment, plant material gathered from the field is moved through a "first stage" threshing apparatus, into a "second stage" threshing apparatus and exits the second stage threshing apparatus as waste plant material.

According to the invention, first stage and second stage threshing apparatuses include an ingress end, an egress end and a threshing chamber. In operation, plant material enters the ingress end, passes through the threshing chamber and exits at the egress end. Typically, the legume seeds exiting a first stage threshing apparatus are not separated from the other plant material. However, in a typical embodiment, greater than 30% of the seeds exiting a first stage threshing apparatus are separated from the pod, indeed, in some embodiments, greater than 40% of the seeds exiting the first stage threshing apparatus are separated from the pod. In some arrangements, a second stage threshing apparatus opens the pods and separates the legume seed from other plant material.

In a typical embodiment of a two stage arrangement, it is believed that greater than 40%-50%, and in some embodiments greater than 65% of the pods are opened by compression. The remainder are believed to be opened by a shear force or impact.

A threshing apparatus also includes at least two threshing members, each threshing member having at least one rotational or forward moving threshing surface. By "forward moving" it is meant that the movement of the threshing surface is in the direction of flow of material within the harvester. Hence, in the case of a harvester having a gathering arrangement at the front and waste material output at the rear, "forward moving" means front to back.

The threshing members are arranged to create a gap between the threshing surfaces. The gap between the threshing surfaces is referred to as the "threshing chamber." Thus, during operation, plant material enters the ingress end of a threshing apparatus, is accelerated by the rotational or forward moving threshing surfaces, is subject to compression or shear forces as it passes through the threshing chamber, and moves out the egress end.

At least one threshing member is arranged to permit at least one threshing surface to move towards and away from the second threshing surface. As the threshing surface of one threshing member moves towards and away from the second threshing surface, the "gap width" of the threshing chamber contracts and expands, respectively. The "gap width" is defined as the distance between opposing threshing surfaces. Generally, the quantity of plant material moving through the threshing chamber affects the expansion and contraction of the chamber.

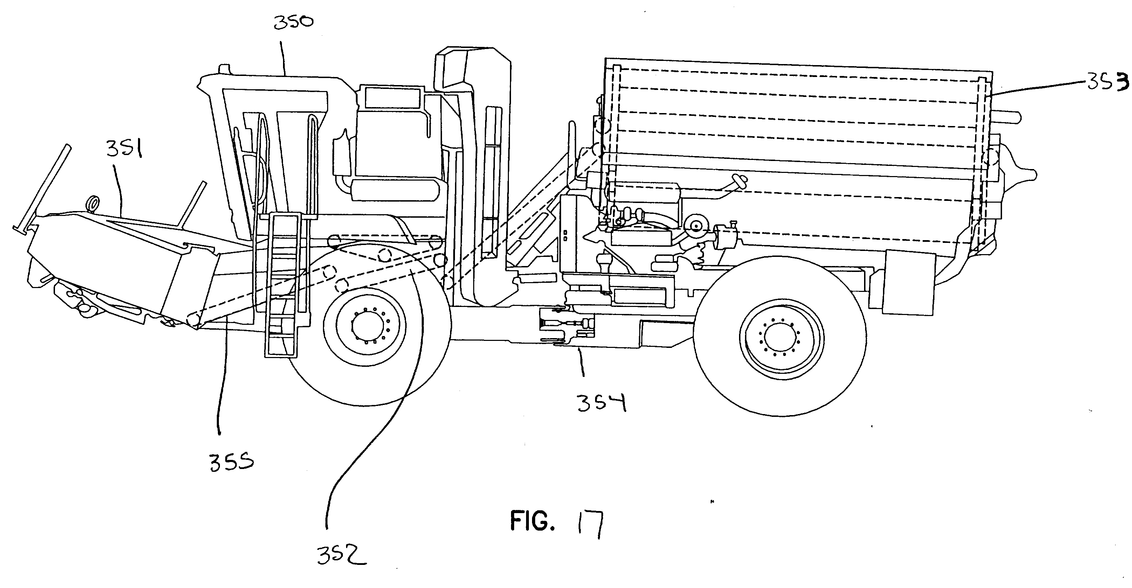

A threshing apparatus also includes a pressure control system having a pressure compensating device (e.g.. hydraulic cylinder, spring) to maintain a substantially constant compressive force in the threshing chamber. A pressure control system can include a hydraulic circuit that includes a pump to provide fluid pressure and a valve to control the fluid pressure in the hydraulic cylinder. An example of a pressure control system is shown in FIG. 16 and described below.

In some threshing apparatuses, a mounting arrangement is used with the pressure control system to allow for exertion of substantially constant pressure on the plant material in the chamber. As used herein, a "substantially constant force" or "substantially constant pressure." means that, generally, the compressive force exerted by the threshing surfaces on plant material moving through the threshing chamber remains constant regardless of the quantity of plant material moving through the chamber. The term "substantially" is used to indicate that some fluctuation in pressure can occur as the pressure control system is adjusting for a change in quantity of plant material or due to fluctuations inherent in a pressure operated system.

The threshing arrangement or threshing apparatus generally includes a driving arrangement (driver) for selectively driving a threshing surface and a drive speed control for selectively controlling the drive speed of the threshing surfaces. Preferably, the drive speed control and pressure control system can be operated in the cab for convenience to the operator. Factors affecting the selected threshing surface speed and compression in the chamber include, for example, speed of travel of the harvester, crop density, crop type, crop maturity, field conditions and the like.

A "threshing member" can be a cylindrical (or ovoid) body, and includes hollow cylinders (drums, rotors), solid cylinders (rotors), a conveyor belt, or combinations thereof. As used herein a "drum" is generally hollow, thus having an internal and external cylinder wall, whereas a rotor can be solid or hollow. Generally, the threshing surface of a drum is the internal surface of the cylinder wall and the threshing surface of a hollow or solid rotor, is the external cylinder wall. If the threshing member is a drum, typically the wall of the drum is perforate. In the case of a conveyor belt, the threshing surface is a surface of the conveyor belt.

Generally, a threshing member has two ends. In the case of a cylindrical member, the ends are at opposite aspects of the longitudinal dimension of the member. In the case of a conveyor belt, the ends are at opposite aspects of the longitudinal dimension. The longitudinal dimension of the belt is defined by the distance between the farthest spaced rollers.

The "threshing chamber" has a length dimension and width dimension which are defined by the length and width of the threshing surfaces. As previously stated, the "gap width" is the distance between opposing threshing surfaces. The volume of the threshing chamber varies with the gap width of the threshing chamber.

The forward or rotational movement of the opposing threshing surfaces can be in the same or opposite direction, relative to each other. However, relative to the threshing chamber, the direction of travel of opposing threshing surfaces is the same. Movement of the threshing surfaces can be at the same or different speed. However, movement of the threshing surfaces at different speeds, creates a shear force on the plant material within the threshing chamber which advantageously facilitates pod opening. Drivers suitable for moving the threshing surface of a threshing apparatus are known and include, for example, gas, hydraulic or electric motors. Drive speed controls for selectively controlling the drive speed of the threshing surfaces are also known. During operation, typically, at least one of the threshing surfaces is driven at a speed 5 to 100%, preferably 10 to 40%, more preferably about 25% greater than an opposing threshing surface. Generally, speed of the threshing surfaces is measured in surface feet per minute (SFM), lineal feet per minute (LFM) or revolutions per minute (RPM).

In some embodiments, a threshing member can be mounted using a mounting arrangement which provides for each end of the threshing member to move independently of the other end. Alternatively, in some embodiments, a first end of a first threshing member can be mounted with a mounting arrangement which permits the threshing member to move toward and away from a second threshing member, while the second end of the first threshing member remains fixed. That is, the fixed end provides a pivot point around which the movable end moves.

In another embodiment, a mounting arrangement for a threshing member can include at least one spring to bias one threshing member towards another threshing member, causing a substantially constant force to be maintained on the plant material therebetween.

In one embodiment, at least one of the threshing members may include protrusions (paddles) to enhance movement of plant material both in and out of the threshing chamber. Generally, protrusions are used when the threshing member is a rotor.

In a preferred embodiment, a two stage threshing arrangement is provided. When the two stage threshing arrangement is a harvester, plant material moves into and through the first threshing apparatus and then into and through the second threshing apparatus and exits the second threshing apparatus as waste plant material.

Advantages of a two stage threshing apparatus include a reduction in extraneous vegetable matter (EVM) and reduced damage to the seed. EVM is non-seed plant material which can be included with the cleaned seed. In practical terms, reduced EVM means less clean up of the seed product once it reaches the processing factory. A two stage threshing arrangement typically provides cleaned seeds with less than 20% EVM, more preferably less than 12%, preferably less than 5%.

Preferred embodiments also provide reduced damage to the legumes harvested. Value reducing damage to seeds, for example peas, includes, splits in the skin, and debris, such as grit or sand, below the skin. The damage caused to the seeds can also be affected by, for example, age of crop, variety of crop, genetics of crop and the duration of the threshing process. Some embodiments disclosed herein provide less than 20%, preferably less than 10%, more preferably less than 5% damaged seeds. One theory for the reduced damage caused by a two stage arrangement is that the combined use of a first stage and second stage threshing apparatus, as disclosed herein, provides reduced impact damage to the peas including reduced time in an impact causing apparatus. Hence, by increasing the percentage of pods opened before entering the second stage threshing apparatus, the first stage threshing apparatus reduces the time the seed must spend in the drum to be separated from the other plant material and thus the seeds are less likely to sustain damage.

### A. First Stage Threshing Apparatus

A first stage threshing apparatus opens a legume pod. It is not necessary for this apparatus to separate the legume from non-legume plant material. In one embodiment of a two stage threshing arrangement, a first stage threshing apparatus can be a known threshing device. For example, a suitable first stage apparatus for a two stage threshing arrangement is disclosed in U.S. Patent Nos. 5,316,519 and 4,915,671, the disclosures of which are incorporated herein by reference. The present disclosure also provides a new first stage threshing apparatus. A herein disclosed first stage threshing apparatus includes at least two threshing members wherein at least one of the threshing surfaces is a conveyor belt. A second threshing surface may be a second conveyor belt or a rotor.

### 1. Conveyor Belt & Rotor First Stage Threshing Apparatus

According to this embodiment at least one of the threshing members is a conveyor belt system and a second threshing member is a rotor. As used herein, a "conveyor belt system" includes a conveyor belt passing around at least two rollers. The threshing surface of the conveyor belt system is the conveyor belt. The threshing surface of a rotor is the external surface of the rotor.

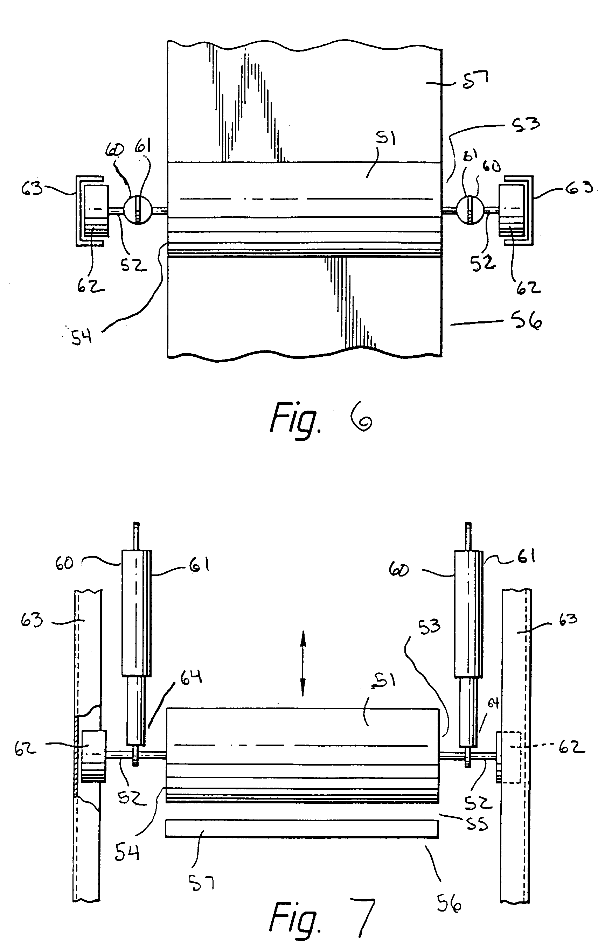

An example of this embodiment is illustrated in FIGS. 1 and 5-7. As used herein a rotor 51 is a solid or hollow cylindrical body prepared from a material which is sufficiently resilient to tolerate use in a threshing apparatus. Generally, suitable materials include for example, steel, aluminium, rubber, plastic, etc. The rotor can be any size suitable for the application for which it is used. In a typical application, a rotor can be about 3 to 30 inches in diameter and about 12 to 54 inches in length. The rotor typically includes an axially located spindle (or axle) 52 for attaching to a mounting arrangement.

The threshing surface 53 of the rotor 51 can include paddles 54 to assist in the movement of plant material into and out of the threshing chamber 55. Rotational movement of the rotor can be provided by a driving arrangement as previously described.

The second threshing member of this embodiment is a conveyor belt system 56. In addition to the conveyer belt 57 and two rollers 58,59 which rotate the conveyor belt 57, a conveyer belt system 56 can also include a previously mentioned driving arrangement to drive the rollers. Suitable materials for conveyors are known and include, for example, rubber, plastic, cloth, etc. Driving arrangements suitable for driving the conveyor belt were described above.

According to this embodiment, the width of the conveyor belt will generally be equivalent to the length of the rotor to provide a threshing chamber 55 which extends the entire length of the rotor. The size of the gap width 56 of the threshing chamber 55 is determined by the distance between the threshing surfaces. The length of the conveyor belt system is the distance between the two farthest spaced rollers 58,59. The length of the conveyor belt system according to this embodiment can be about 20 to 100 inches.

Typically, according to this embodiment, the rotor is located above the conveyor belt. Preferably, at least one of the threshing members is constructed and arranged to permit at least one of the threshing surfaces to move towards and away from the other threshing surface. Referring to FIGS. 5-7, in one embodiment, a threshing apparatus maintains a substantially constant force on plant material in the threshing chamber, by use of a mounting arrangement including one or more pressure compensating devices 60 attached at one or both ends of the rotor spindle 52. In a one embodiment, a mounting arrangement for the rotor 51 is configured to permit each end of the rotor to move independently of the other to provide for the compressive force to be more evenly applied along the length thereof. Preferably, the mounting arrangement includes a pressure compensating device 60 such as a hydraulic cylinder 61 and a pressure control system, for example, as shown in FIG. 16. A first end of the hydraulic cylinder 64 is attached to spindle 52 and a second end is attached to a fixed point above (not shown). The fixed point may be suitable structural attachment point, including the chassis.

An example of a pressure control system suitable for a threshing arrangement disclosed herein is shown in FIG. 16. According to this example, a variable displacement pump 326 generates a constant system pressure of about 170 bar and allows the volumetric flow rate to change to suit requirements. The flow of oil is directed to the hydraulic cylinders 327 via an on-off valve 328 and a pressure-regulating valve 329, fitted in the vehicle cab to permit the operator to increase the circuit pressure as conditions vary. A gauge 330 indicates the system pressure. It will be seen that, with the rams 327 supplied in parallel, a generally uniform pressure is applied to the plant material between the rotor and wall of the drum along the length thereof. In a preferred embodiment, the pressure at the hydraulic cylinder is about 35-40 bar.

The mounting arrangement can also include rollers 62 mounted to spindle 52, which move up and down in a track 63 as the hydraulic cylinder 61 contracts and extends.

In general, during operation, plant material is moved into the threshing chamber 55 by forward movement of the conveyor belt (arrow 64). Compression and/or shear forces are exerted on the plant material as it passes between the rotor and conveyor belt. According to this embodiment the threshing surfaces move in the same direction relative to the threshing chamber, and in opposite directions relative to each other. Preferably, the conveyor belt of the system travels at a greater surface speed than intake conveyor from the gathering arrangement. The advantage of this is described below under the "double conveyor belt system."

Typically, the threshing arrangement includes a drive speed control system to control the drive speed of the threshing surfaces. In a preferred embodiment, at least one of the threshing members is driven at a surface speed of 5 to 100 percent, preferably 10 to 40 percent, more preferably about 25 percent, faster than a second threshing member.

Preferably, the compressive force exerted on the plant material passing through the threshing chamber can be set by the operator and it will remain substantially constant regardless of the quantity of plant material between the threshing surfaces.

One example of this embodiment, is shown mounted on a harvester 1 in FIG. 1. The rotor 12 is mounted above conveyor belt 13.

### 2. Double Conveyor Belt First Stage Threshing Apparatus

In another embodiment, at least two threshing members of the threshing apparatus are conveyor belt systems. As described above, a "conveyor belt system" includes a combination of a conveyor belt and at least two rollers which rotate the conveyor belt. In one embodiment, a third roller is included on at least one of the conveyor belt systems. Conveyor belts suitable for the invention are as described above. A preferred belt can have a gripping surface. One suitable belt is a "ROUGH TOP", available from Belt Service Corp., St. Louis, MO. Drivers for driving the conveyor belt system are as described previously. Preferably, the threshing arrangement or threshing apparatus includes a drive speed control system for selective controlling the surface speed of the threshing surfaces.

According to this embodiment, there is no set length or width of the conveyor belt except for constraints from the equipment the system will be operated with. Typically the width of the conveyor belt is about 30 to 60 inches, preferably, 36 to 40 inches. The length of the conveyor belt system is measured as the distance between the two rollers. If three rollers are used, the length is the distance between the two rollers farthest apart. Typically the length of the conveyor belt is about 30 to 70 inches, preferably, 36 to 40 inches.

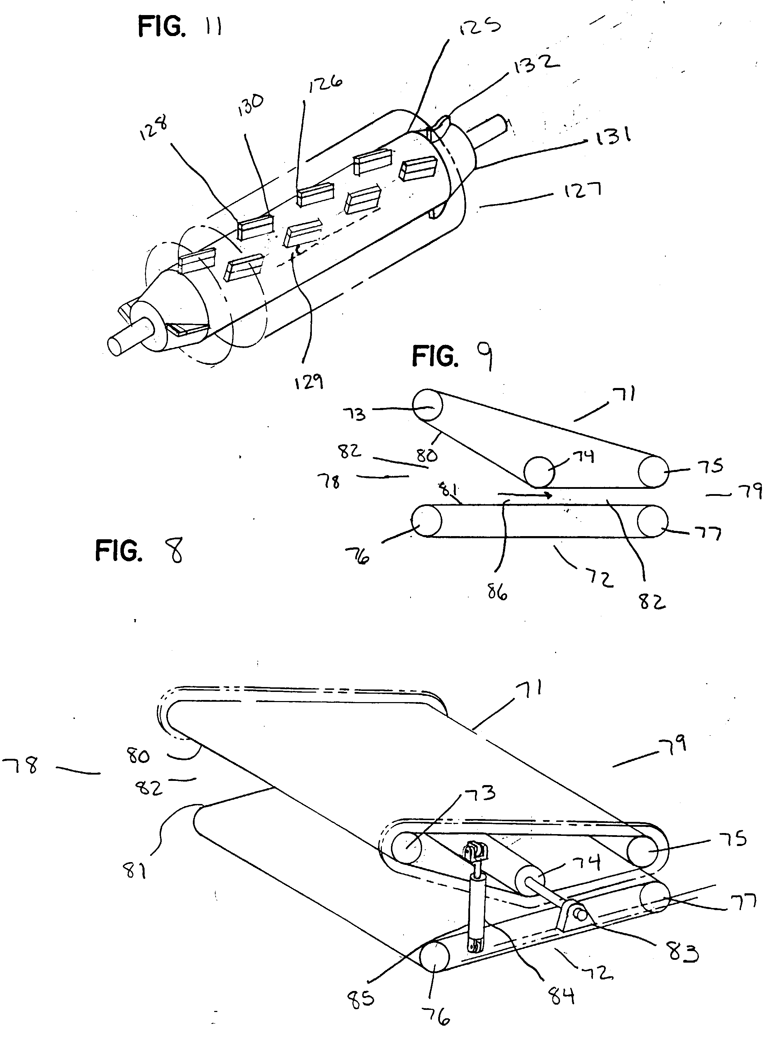

One example of the present embodiment is illustrated in FIGS 8 and 9. According to the illustrated embodiment, the upper conveyor belt system is a three roller system 71. The lower conveyor belt system 72 is a two roller system. When viewed from the side, FIG. 9, the ends of the three rollers 73,74 and 75, define the three apical points of a triangle. In one preferred embodiment, the distance between roller 73 and 74 is about 15 inches and the distance between rollers 74 and 75 is about 24 inches. The length of the conveyor belt between rollers 73 to 75 is about 39 inches. The length of the lower conveyor belt between rollers 76 and 77 is about 42 inches. The end of the threshing apparatus with the greatest distance between the threshing surfaces is the ingress end 78 where plant material enters the threshing apparatus. The opposite end is the egress end 79, the end where plant material exits the threshing apparatus.

The threshing members are configured and arranged such that the upper 80 and lower 81 threshing surfaces define a "threshing chamber" 82. The gap width of the threshing chamber is determined by the distance between opposing threshing surfaces.

Preferably, a first conveyor belt system is mounted to allow movement of the first threshing surface towards and away from the threshing surface of a second conveyor belt system. In the embodiment shown, the upper conveyor belt system can be mounted, relative to the lower conveyor belt system, with a pillow block bearing 83. Thus, the upper conveyor belt system can pivot, relative to the lower conveyor belt system, around the rotational axis of roller 74. This provides for the threshing surface of the upper conveyor belt system 71 to pivotally move towards and away from the lower conveyor belt system 72. The length of the threshing chamber, in the embodiment shown, is approximately equal to the length of the conveyor belts. The upper and lower conveyor belts need not be of equal length.

Preferably, the threshing apparatus includes a pressure control system which maintains a substantially constant compressive force on plant material passing through the threshing chamber 82 regardless of the quantity of plant material between the threshing surfaces 80,81. In the embodiment of FIG. 8, the pressure control system includes a pressure compensating device 84 in the form of a hydraulic cylinder 85. The hydraulic cylinder 85 extends across the threshing chamber 82 and mounts to the upper 71 and lower 72 conveyor belt system. Alternatively, a pressure compensating device, such as a hydraulic cylinder, can be mounted to the upper or lower conveyor belt system at one end and to the chassis or other appropriate attachment point at the other end.

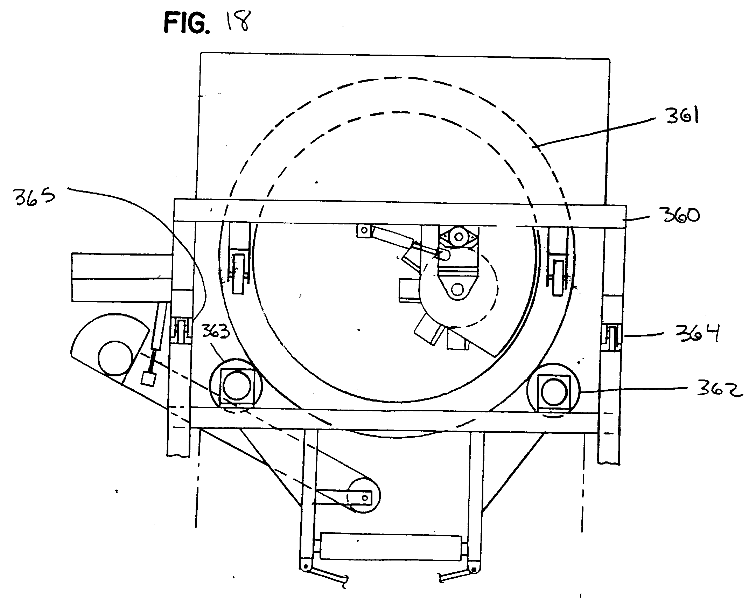

During operation, plant material is moved from the gathering arrangement into the ingress end 78 of the threshing apparatus via the intake conveyor. See FIG. 17, 355. Preferably, the opposing threshing surfaces rotate (arrow 86), relative to the threshing chamber, in the same direction, i.e. toward the egress end 79 and in opposite directions relative to each other.

The threshing arrangement or threshing apparatus can also include a drive speed control to selectively control the speed of the driver which drives the threshing surfaces. Preferably, the driver drives rollers 75 and 77 which are at the egress end 79 of the threshing apparatus.

Preferably, the conveyor belt surface speed of the upper or lower conveyor belt system, travels at a greater surface speed than the intake conveyor (see e.g.., FIG. 1, 6) which carries plant material from the gathering arrangement. The advantage of the greater speed is that the plant material is "accelerated" relative to the intake conveyor belt as it moves into the threshing chamber. The acceleration reduces the likelihood of: compaction of the plant material; loss of released seeds; or bunching, jamming or plugging of plant material from heavy or inconsistent crop growth patterns. Preferably, at least one of the threshing surfaces is driven at a surface speed 5 to 100 percent, preferably 10 to 40 percent, more preferably about 25 percent, faster than the opposing threshing surface.

An example of a double conveyor belt first stage threshing apparatus mounted on a harvester is illustrated in FIG. 17 at 352.

### B. Second Stage Threshing Apparatus

The second stage threshing apparatus is described herein as it may function in a two stage threshing arrangement. However, as with a first stage threshing apparatus, the disclosed second stage threshing apparatus can be used alone, or in combination with one or more conventional or new threshing apparatuses.

Description of the following embodiments includes references to the location of some components of the apparatuses in relation to other components of the apparatuses. The relative locations recited are not intended to limit the component locations, but rather, the relative locations are to provide a model for understanding the operation of the apparatuses. As with other threshing apparatuses disclosed, the presently described embodiment of a threshing apparatus includes at least two threshing members, each includes a moveable threshing surface. The threshing surfaces are arranged to form a "threshing chamber". According to this embodiment, however, the threshing members are configured and arranged such that at least one threshing member (and threshing surface) is contained within the confines of the threshing surface of another threshing apparatus. The present embodiment not only provides for opening of legume pods, but, in some embodiments, also advantageously provides for release of the seed from the opened pod as well as separation of the seed from the remainder of the plant material.

According to this embodiment of the invention, a first threshing member is a hollow cylinder or "drum". The drum has an ingress end and an egress end for passage of plant material into and out of the drum. The drum has a cylindrical wall with a concave internal and convex external surface. The threshing surface of the drum is the concave internal surface. Typically, the cylindrical wall is perforate. The perforate wall allows for released seeds to escape from the threshing apparatus. Perforation size can vary according to the type and maturity of crop threshed. Conventional perforate walls, or "screens", for different types of crop are suitable for the invention.

The length and diameter of the drum can vary. However, unique features of the herein disclosed mechanisms for application of compression and shear forces to open legume pods permits efficient production of high yields of undamaged seeds using a significantly smaller drum than used in conventional legume harvesters. In one embodiment, the diameter of the drum is about 4-7 feet, typically about 5.5 feet. The length of the drum can be about 13 to 20 feet, typically about 15 feet.

In one embodiment, the drum fits into a "drum support frame" which can be mounted to a harvester chassis. See e.g.. FIG. 19. The drum support frame provides a structure for attaching components appurtenant to the drum and provides a mechanism for pivotally raising and lowering the egress end of the drum. The drum support frame also provides a stationary structure within which the drum rotates.

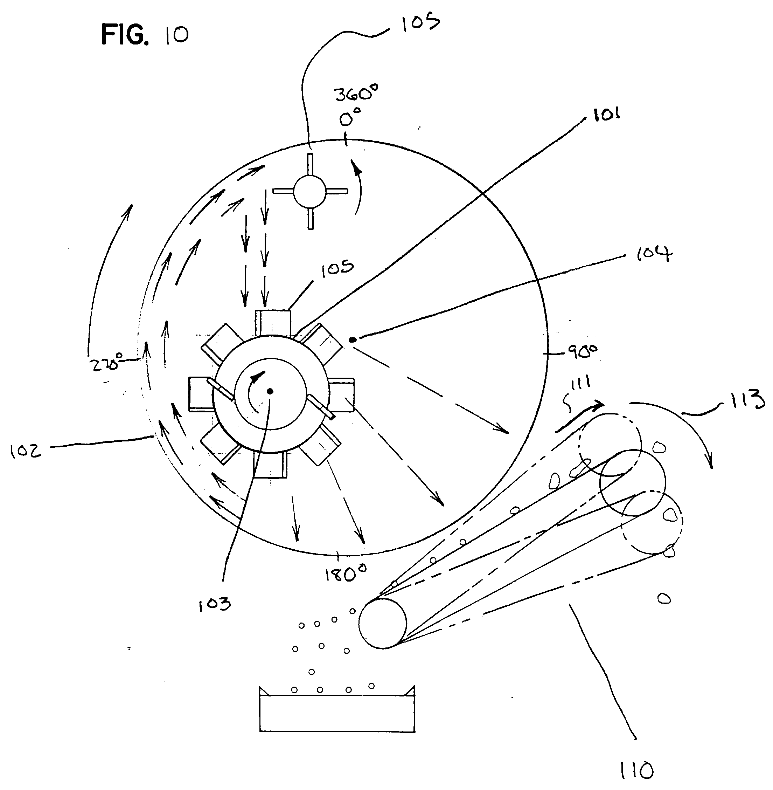

A second threshing member of this embodiment is a "rotor" which is located inside the drum. A rotor can be a hollow or solid cylindrical body. The convex external wall of the rotor is the threshing surface. Hence, according to this embodiment, the threshing chamber is defined by the internal wall of the drum and the external wall of the cylinder, and the gap width is determined by the distance between the drum and rotor. The rotor, typically includes a spindle or axle along the rotational axis of the rotor to facilitate mounting within the drum. Referring to FIG. 10, the positioning of the rotor 101 within the drum 102 is diagrammatically shown.

Referring now to FIG. 10, for orientation purposes of the reader, the view is looking into the egress end of the drum with the longitudinal axis of the drum 102 horizontal. According to the embodiment, the centre of the rotational axis 103 of the rotor 101 is not concentric with the centre of the rotational axis 104 of the drum. The rotational axis of the rotor 103 is within the quadrant of the drum having a radial arc between 180 and 270 degrees: zero being at the 12 o'clock position and extending clockwise. Typically, plant material enters the ingress end of the drum in the region from 90 to 270 degrees and waste plant material can exit the egress end of the drum at any area of the circumference of the drum, typically between 90 and 270 degrees.

The dimensions of the rotor are generally proportional to the dimensions of the drum. The length of the rotor is about equivalent to the length of the drum thus providing a threshing chamber which extends the functional length of the drum. The diameter of the rotor should be that which does not substantially inhibit the apparatus from functioning to open pods or separate the seeds from the other plant material. In one embodiment, the diameter of the rotor is about 20 inches.

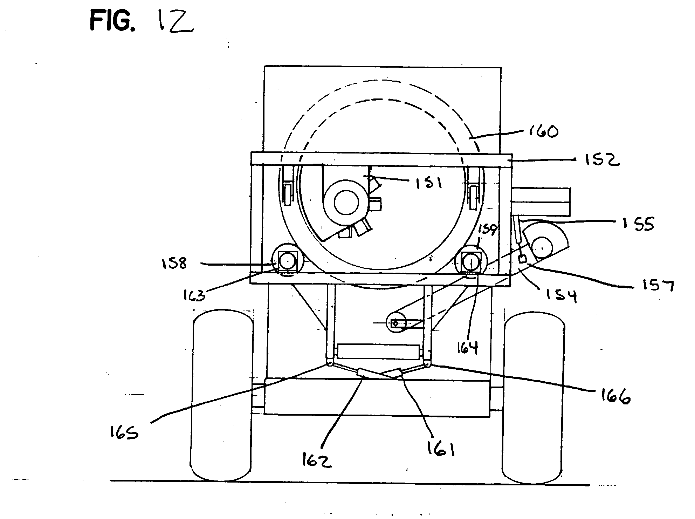

In one embodiment, the rotor 101 can include paddles 105. Paddles can facilitate movement of plant material within the drum. Referring to FIG. 11, in one embodiment, paddles 126 can be mounted on a rotor 125 in the pattern shown in FIG. 11. According to this embodiment, 8 rows of 4 paddles 126 (only two rows are shown) are mounted around the circumference of the rotor. The paddles are offset in adjacent rows, such that the paddles of alternating rows are in circumferential alignment. The paddles in this example are about 10 inches long and about 4 to 8 inches wide. The paddles can be attached to the rotor such that they can be adjusted towards and away from the rotor surface to provide an adjustable width. In FIG. 11, the ingress end of the rotor 127 is toward the viewer's right. In a frontal view (not shown) when the rotor is horizontal, the egress end of a paddle 128 can be angled 129 about 20° to 30° above horizontal relative to the ingress end of the paddle 130.

In one embodiment, the ingress end of the rotor 127 can be tapered into a cone shape 131. As shown in FIG. 11, one or two tapered spiral paddles 132 can be mounted on the tapered ingress end to provide an auger effect to help "pull" plant material into the ingress end of the drum. Hence, in the embodiment shown in FIG. 11, the overall diameter of the rotor, including paddles, can be about 28 to 36 inches.

The rotor can be constructed and arranged to permit movement of the threshing surface of the rotor towards and away from the threshing surface of the drum. This movement provides for expansion and contraction of the threshing chamber in response to, for example, the density of plant material in the drum. "Mounting arrangements", for mounting the rotor can be attached to the drum support frame at both the ingress end of the threshing apparatus. In one embodiment, mounting arrangements which allow for each end of the rotor to move independently of the other end can be used. However, in some arrangements it can be advantageous to mount the egress end of the rotor using a "fixed pivot mount." As used herein, a "fixed pivot mount" maintains the rotational axis of the egress end of the rotor spindle fixed relative to the internal surface of the drum, but still permits the ingress end of the rotor to move freely. Referring to FIG. 12, a fixed pivot mounting arrangement 151 can be attached to the drum support frame 152. Such a fixed pivot mount 151 can include, for example, a self aligning bearing. The fixed pivot mount 151 "fixes" the gap width of the threshing chamber at the point of attachment of the rotor at the egress end. As stated previously, the minimum gap width of the threshing chamber is preferably of sufficient width to prevent substantial damage to the seed when moving through the threshing chamber. The desired gap width, the diameter of the drum and the diameter of the rotor affect the positioning of the fixed pivot mount. In one presently preferred embodiment, when the diameter of the drum is about 5.5 feet and the outside diameter or the rotor, including paddles is about 32 inches, the fixed pivot mount is attached to the drum support frame such that the gap width of the threshing chamber at the egress end of the drum is about 2.75 to 4 inches.

Preferably, the ingress end of the rotor is mounted with a mobile mounting arrangement. By "mobile mounting arrangement" it means the mounting arrangement provides for the rotor to move towards and away from the internal surface of the drum. When the egress end of the rotor is mounted to provide a threshing chamber width of about 2.75 to 4 inches, a suitable mobile mounting arrangement provides for about 6 inches of movement of the rotor away from the drum wall.

A mobile mounting arrangement generally includes a pressure compensating device such as a hydraulic cylinder or a spring. Using a hydraulic cylinder and pressure control system, the mounting arrangement provides for a substantially constant compressive force to be exerted on plant material passing through the threshing chamber regardless of the quantity of plant material passing between the threshing surfaces. That is, the hydraulic cylinder and pressure control system compensates for changing amounts of plant material in the drum to maintain the same relative pressure in the chamber.

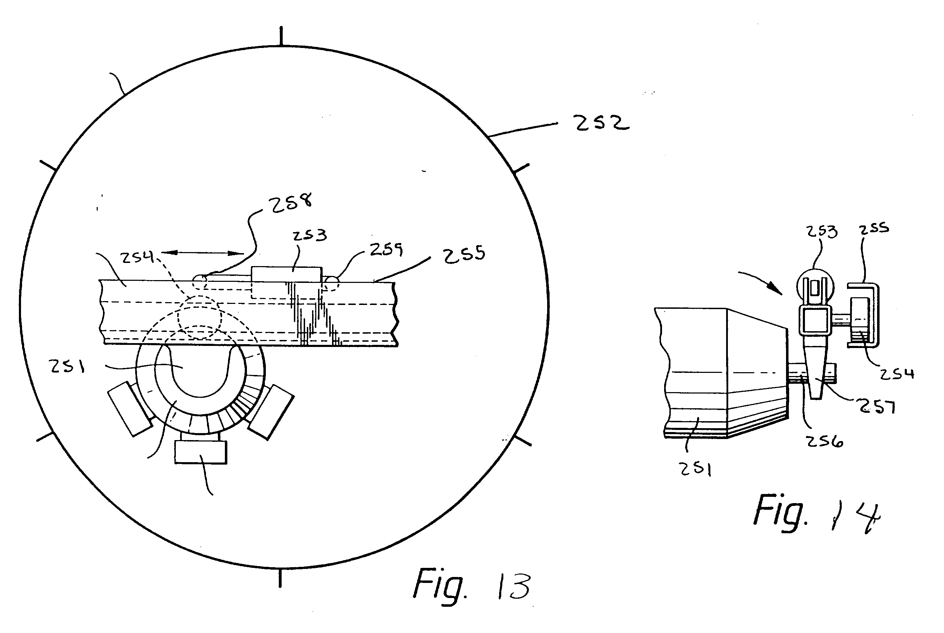

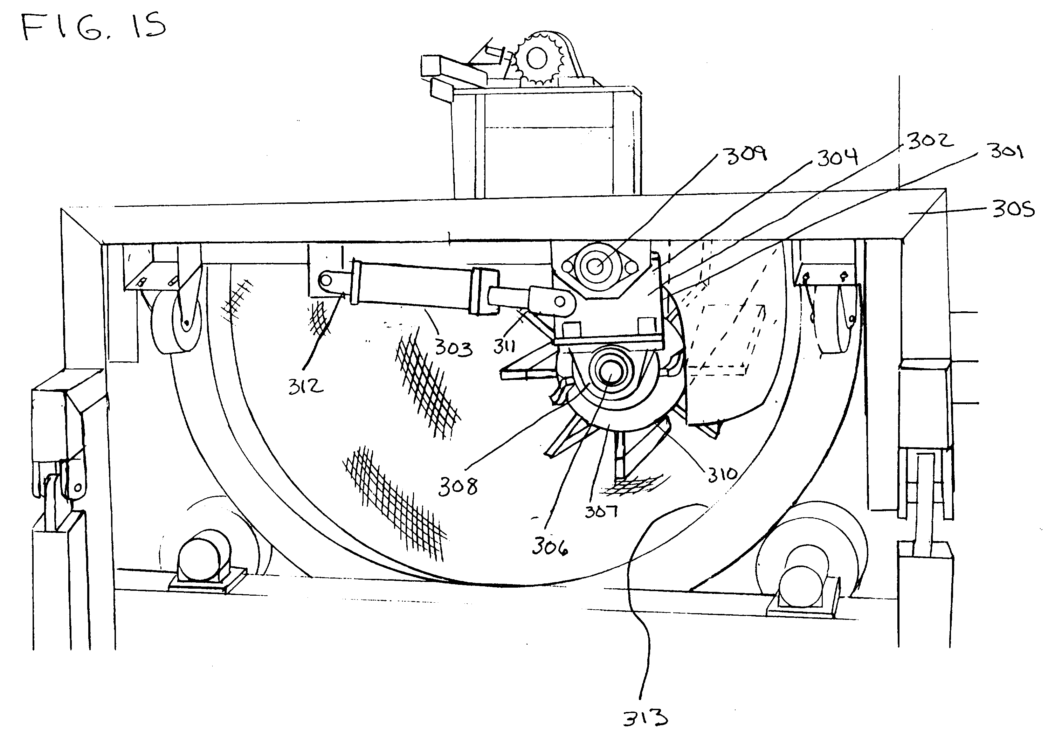

When the egress end of the rotor is fixed and the ingress end is mobile, the configuration of the threshing chamber can change. That is, the gap width of the threshing chamber can be a single width throughout its length, the gap width can narrow from ingress end to egress end or the gap width can widen from ingress end to egress end. Generally, when moving through the threshing apparatus, the plant material will tend to cause the gap width of the threshing chamber to be wider at the ingress end and narrower at the egress end, thus providing "progressive compression" of the plant material as it moves through the drum. "Progressive compression" is discussed below. In addition, in one embodiment, as the plant material moves through the drum, it travels in a spiral path from the ingress end to the egress end. The spiral movement, as well as movement of plant material through the drum in general, can be facilitated by mounting the previously described paddles longitudinally around the circumference of the rotor. In one embodiment, shown in FIGS. 13 and 14, a rotor 251 can be mounted within the drum 252 with a mobile mounting arrangement including a hydraulic cylinder 253 and a roller 254 which moves in a transverse track 255. The roller can be mounted directly on the rotor spindle 256, or, as shown in FIG. 14, the spindle can be mounted in a support bearing 257 offset from the roller. In the embodiment shown, the transverse track 255 is oriented transversely, parallel to the horizontal diameter of the drum. When this type of mounting arrangement is used at both ends of the rotor, preferably, the transverse tracks 255, at each end of the rotor 251, are mounted directly opposite each other.

According to this embodiment, as the rotor 251 moves laterally towards and away from the drum wall, the roller 254 moves back and forth in the transverse track 255. Generally, the hydraulic cylinder 253 is mounted parallel to the track 255 with one end of the hydraulic cylinder 258 mounted near the rotor spindle 256, and the other end of the hydraulic cylinder 259 attached at or near the transverse track 255. Hence, when the amount of plant material in the threshing chamber causes the pressure in the threshing chamber to rise in excess of the predetermined pressure setting to the hydraulic cylinder, the hydraulic cylinder retracts away from the drum wall and allows the rotor 251 to roll away from the drum wall. When the volume of plant material in the chamber decreases such that the pressure in the threshing chamber is below the pressure setting of the hydraulic cylinder 253, the hydraulic cylinder 253 extends and pushes the rotor back to the drum wall to maintain a substantially constant pressure. When this type of mounting arrangement is used at both ends of the rotor 251, the tracks 255 are arranged such that there may be pivoting of the rotor 251 relative to each track. Pivoting provides for each end of the rotor 251 to move independently according to the conditions nearer to that end. Thus, for example, one end of the rotor 251 having a small quantity of plant material between it and the drum 252 may be moving towards the wall of the drum at the same time the other end of the rotor may be moving away from the wall to accommodate a larger quantity of plant material.

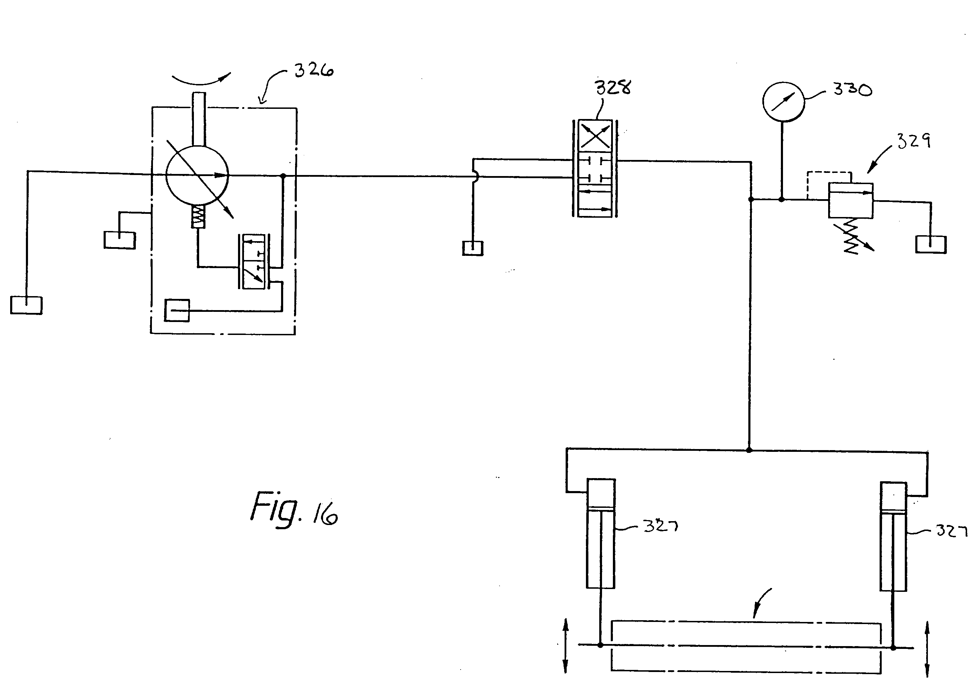

A presently preferred embodiment of a rotor mounting arrangement for the ingress end of the rotor is a "pendulum mounting arrangement." An example of this type of mounting arrangement is shown in FIG. 15. The pendulum mounting arrangement 301 includes a "pendulum carriage member" 302 and a hydraulic cylinder 303 connected to a pressure control system (not shown). According to this embodiment, a first end of the pendulum carriage member 304 is pivotally mounted to the drum support frame 305 above the ingress end of the spindle 306 of the rotor 307. The ingress end of the rotor spindle 306 is mounted at a second end of the pendulum carriage member 308.

As used herein, "pivotally mounted" includes, for example, mounting the first end of the pendulum carriage member on a shaft 309 or similar device around which the pendulum carriage member 302 can pivot. Generally, when the centre of the rotor spindle 306 is in direct vertical alignment with the pivot shaft 309, the rotational axis of the rotor is parallel with the rotational axis of the drum. When in this configuration, the gap width of the threshing chamber will be substantially the same from ingress end to egress end.

A pendulum mounting arrangement 301 provides for the external rotor surface (threshing surface) 310 to pivot towards and away from the internal wall of the drum 313. Generally, a first end 311 of the hydraulic cylinder 303 is attached to the pendulum carriage member 302 and a second end of the hydraulic cylinder 312 is attached to the drum support frame 305 or other suitable attachment point. In one embodiment, the first end of the hydraulic cylinder 311 mounts to the pendulum carriage member 302 between the pivot point 309 of the pendulum carriage member 302 and the rotor spindle 306. Hence, during operation, when the amount of plant material in the threshing chamber causes the pressure in the threshing chamber to rise in excess of the predetermined pressure setting to the hydraulic cylinder, the hydraulic cylinder retracts from the drum wall and the rotor 307 pivots away from the drum wall. When the volume of plant material in the threshing chamber decreases such that the pressure in the threshing chamber is below the pressure setting of the hydraulic cylinder, the hydraulic cylinder will pivot the rotor back to the drum wall to maintain a substantially constant pressure on the plant material.

As with other threshing apparatuses disclosed herein, the opposing threshing surfaces of the drum and rotor move. The rotor and drum move in the same direction relative to the threshing chamber, and relative to each other. In the orientation shown in FIG. 10, when viewed from the egress end, the drum and rotor both rotate clockwise. Drivers suitable for driving the rotor and drum have been described earlier. Preferably, the threshing arrangement or threshing apparatus includes a drive speed control for selectively controlling the speed of the threshing surfaces.

In a preferred embodiment, at least one of the threshing members is driven at a surface speed 5% to 100%, preferably 10% to 40%, more preferably about 25%, faster than a second opposing threshing member. Typically, the rotor is the faster moving surface. Preferably, however, the internal drum surface is moving at a speed whereby centrifugal force helps carry the incoming plant material along the internal wall of the drum to the drum apex. Hence, in addition to creating a shear force on the plant material to enhance pod opening by speed differential of the drum and rotor, the speed of the drum also assists in moving the plant material to the apex of the drum. Furthermore, as the plant material moves up a conveyor from the first threshing apparatus, and into the drum, the rotational movement of the drum can act to "stretch" the plant material as it is pulled into the drum. This "stretching" of the plant material can help reduce compaction of the plant material, prevent released seeds from being lost, and reduce bunching, jamming or plugging of materials due to heavy or inconsistent growth patterns. Rotational speed of the drum in revolutions per minute (rpm) is about 25 to 50 rpm, depending on conditions. The revolutions per minute of the rotor is about 150-250 rpm, and can be up to 280 rpm.

Referring again to FIG. 10, a second stage threshing apparatus can also include a third cylinder which is also located in the drum. This cylinder, referred to as a "separator device" 105 is approximately the same length as the rotor 101 or drum 102 and hence extends the entire length of the drum. Typically, the separator device is located at or near the apex of the drum (i.e. 0 degrees). It is generally of a smaller diameter than the rotor and includes 2 or more radially extending paddles which run the length of the device. In one embodiment, the separator device includes four equally spaced paddles around its circumference. The overall diameter of the separator device can be about 4 to 12 inches, typically about 8 inches. The overall diameter of the separator device, including paddles, is about 14 to 22 inches, typically about 18 inches. In one embodiment, the space between the separator paddles and the drum wall is about 5 to 8 inches.

The separator device is typically driven by a driver as described previously. During operation, the rotation of the separator device is opposite to that of the drum or rotor. Hence, in the arrangement described, when viewed from the egress end, the separator device 105 rotates anti-clockwise.

One purpose of the separator device is to stop or reverse the travel path of plant material moving within the drum. Another purpose of the separator device is to "fluff' or loosen the compressed plant material to allow the seed, which are released from the pod but trapped in the compressed plant material, to be released from the compressed plant material so that the seed can get near the perforate surface of the drum and fall through the perforations and outside the drum.

Therefore, when the drum and rotor are moving clockwise, as viewed from the egress end of the drum, the plant material is compressed as it moves to the apex of the drum. At or near the apex, however, the plant material encounters the anti-clockwise rotating separator device. Upon contact with the separator device it is believed that the plant material falls and is met by the clockwise rotating rotor. When this occurs, several events are believed to occur.

In one event, released seeds, opened pods with unreleased seed, or still unopened pods which are present in the now "fluffed" plant material are thrown, by the clockwise rotating rotor, against the internal wall of the drum. Preferably, the drum wall has perforations of a size sufficient for passage of only the seed and small plant material. If the seed has already been released it will fall through the perforations in the drum wall and outside of the drum. If the pod is open but the seed not yet released, the force of the fall can release the seed so it can fall through the perforations of the drum wall. If the pod is still not open, the impact from the fall can cause the pod to open and release the seed which falls through the perforations of the drum. If the fall does not open the pod, because the intact pod is generally too large to pass through the perforations, the rotation of the drum will carry the pod back through the threshing chamber and the cycle will be repeated. Once the seed passes through the perforate drum wall, it is collected onto a belt, or other arrangement to be transported for further cleaning or storage until removed from the combine. It is believed that the rotational cycle in the drum is repeated about 4 to 10, typically about 5-6 times, on a given piece of plant material before the plant material exits the egress end of the drum as waste plant material. And, with each cycle, the majority of plant material which reenters the threshing chamber re-enters at a point further from the ingress end and closer to the egress end. The previously described orientation of the paddles on the rotor, if present, facilitates front to back movement of plant material within the drum.

In addition, in one embodiment, the rotational axis of the drum can be lowered and raised to enhance movement of the plant material from ingress to egress end. According to this embodiment, during operation, the egress end of the drum is maintained at about 0.5 to 4 degrees, preferably about 1.5 degrees, below the ingress end. In a preferred embodiment, the long axis of the drum can be raised and lowered by up to 12 degrees on either side of horizontal. This feature is particularly advantageous when harvesting on unlevel fields.

To reduce damage to the seed, in a typical embodiment, the majority of seeds are released in the first half of the length of the drum. In some embodiments, 10 to 80 percent of seeds, preferably 70 to 75 percent of seeds pass through the wall of the drum in the front half (ingress end) of the drum. Advantageously, the more seeds which pass out of the drum near the ingress end, the fewer number of seeds which are subjected to repeated compressing cycles through the entire length of the drum. The fewer number of cycles, or reduced time spent in the drum, can reduce damage to the seeds.

Moreover, a second stage threshing apparatus has fewer moving parts than a conventional drum. For example, only one rotor is typically present. While fewer moving parts can mean less impact trauma to the seeds, it can also mean less impact trauma to non-seed plant material. The less the non-seed plant material is subject to impact, the reduced amount of small pieces of waste plant material there is to fall through the perforations of the drum wall with the seed. This further provides a final seed product with reduced EVM.

As will be recalled, in one embodiment of the invention, the egress end of the rotor is mounted using a fixed pivot mount and the ingress end is mounted with a moveable mounting arrangement. Because this arrangement can cause the egress end of the gap width of the threshing chamber to be narrower than the ingress end, and because the volume of plant material in the drum is generally reduced from ingress end to egress end, this narrowing of the gap width nearer the egress end provides a relative "progressive compression" as the plant material moves from the ingress end to the egress end.

In another embodiment, a "drum cleaner" for removing any crop material retained within the perforations of the drum wall can be mounted outside the drum. One such cleaner, for example, includes a cylindrical brush, which extends the length of the drum and can be mounted to the drum support frame or some other structure which permits the cleaner to push back into the drum any small particles trapped in the perforations.

The seeds and small plant waste material passing through the perforations in the wall of the drum fall onto a separating device, for example, a draper belt.

A draper belt operates to separate seeds from plant matter which has passed through the perforated drum wall with the seed. In one arrangement, a draper belt has two rollers which are about as wide as the drum is long, with a distance between the rollers less than the diameter of the drum. Hence, configurationally, the draper belt is a rectangular shaped cube with a broad width and short length. When in operation, the width dimension of the draper belt is oriented in the same direction as the rotational axis of the drum. The length direction is oriented at a suitable angle, relative to the drum, to facilitate separation of the seeds passing through he perforations in the drum, from small plant matter. Referring now to FIG. 10 and 12, the draper belt 110, 154 is viewed from the egress end of the drum 102, 160. Rotation of the belt (arrow 111), relative to the drum orientation described earlier, is clockwise. Functionally, when most seeds, or small plant matter, passes through the perforated wall of the drum, they land on the draper belt. Ideally, the draper belt is orientated at a steep enough angle to permit the rollable seeds to roll down the angle of the belt rapidly enough to avoid being carried up by the belt's "upward" rotation, but not so steep as to cause the plant material to roll down as well. Generally, the appropriate angle of the draper belt can be measured relative to a vertical plane. That is, according to the arrangements herein, the appropriate angle for the draper belt incline when a harvester is travelling on the side of a hill is the same, relative to vertical, as when the harvester is on flat ground. However, in mechanical terms, as the harvester moves from flat land to a side hill and vice versa, the angle of the draper belt must rotate relative to the harvester to maintain the same angle relative to vertical. FIG. 10 illustrates that the axis of rotation of the belt is the rotational axis of the lower draper belt roller 112.

The appropriate draper belt angle is selected based on crop size, maturity, moisture or other factor. In conventional harvesting systems, the draper belt is manually raised and lowered when the incline of the land changes. However, according to another aspect of the present disclosure, a harvester can include an "automatic levelling system" for a draper belt. As disclosed herein, an automatic levelling system includes a draper belt, "an angle compensating arrangement" and an "incline sensor" for detecting changes in the incline of the field. Suitable incline sensors are known and include, for example, a pendulum switch. Suitable "angle compensating arrangements" can be gas, electric or hydraulically operated. During operation, the desired draper belt angle is set relative to vertical. The pendulum switch then functions to detect and send a signal to the angle compensating arrangement when the orientation of the draper belt changes relative to vertical. The signal sent by the pendulum switch causes the angle compensating arrangement to rotate (arrow 11 3) the draper belt 110 around the lower belt roller 112 until the set angle between the draper belt and vertical are restored. Referring to FIG. 12, one example of an "angle compensating arrangement" for a draper belt 154 is illustrated. According to this arrangement, there is included at least one hydraulic cylinder 155 and a hydraulic circuit (not shown). One end of a hydraulic cylinder is mounted to a longitudinal end 157 of the draper belt 154, and the other end is mounted to the chassis, drum supporting frame or other suitable structural attachment point (not shown). When the pendulum switch detects a change in draper belt relative to vertical, it sends a signal and the hydraulic circuit will operate to extend or contract the hydraulic cylinder 155 which causes the draper belt 154 to rotate up or down. In a preferred embodiment, a hydraulic cylinder is mounted at both longitudinal ends of the draper belt.

A conveyor can be mounted below the draper belt and arranged such that the seeds which roll down the draper belt land on the first conveyor. The first conveyor preferably carries the legumes to a cleaning device, for example, a suction fan, which further separates any remaining waste plant material from the seeds. The seeds can then be transferred to an elevator, for example, a bucket elevator. The bucket elevator can then carry the seeds to a hopper.

### 1. Harvester

Harvesters for harvesting crops are known. Some components of a harvester are standard on a modern day harvester. Other components are crop specific. Standard components include, for example, a chassis upon which is mounted a drive engine, operator's cab, component operating system (e.g.. electrical, mechanical and hydraulic systems) and harvesting components to pick up, thresh, clean and store the crop. New combining components disclosed herein are particularly suited for use on legume harvesting machines.

According to one embodiment, a new gathering arrangement and two-stage threshing arrangement are operably mounted on a SUPER JACK 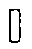 . crop harvester chassis which is diagrammatically shown in FIG. 17. The SUPER JACK 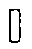 . is available from Pixall Limited Partnership, Clear Lake, Wisconsin. The embodiment illustrated, includes an operator's cab 350, gathering arrangement 351 and a two stage threshing arrangement including a first stage threshing apparatus 352 and a second stage threshing apparatus 353. The SUPER JACK 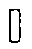 . system also includes an intake conveyor belt 355 and, a draper belt, lifting belts, fans, motors and other devices to facilitate harvesting.

One unique feature of the SUPER JACK 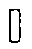 . arrangement is its articulating chassis arrangement 354. The use of the SUPER JACK 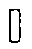 . articulating chassis arrangement in combination with the apparatuses of the invention provide a reduced weight harvester. When outfitted for harvesting peas, the disclosed embodiment can be about 20% to 40%, typically about 30% reduced in weight compared to conventional pea harvesters. The reduced weight not only provides reduced capital and operating costs, but also reduces compaction of soil in the crop fields.

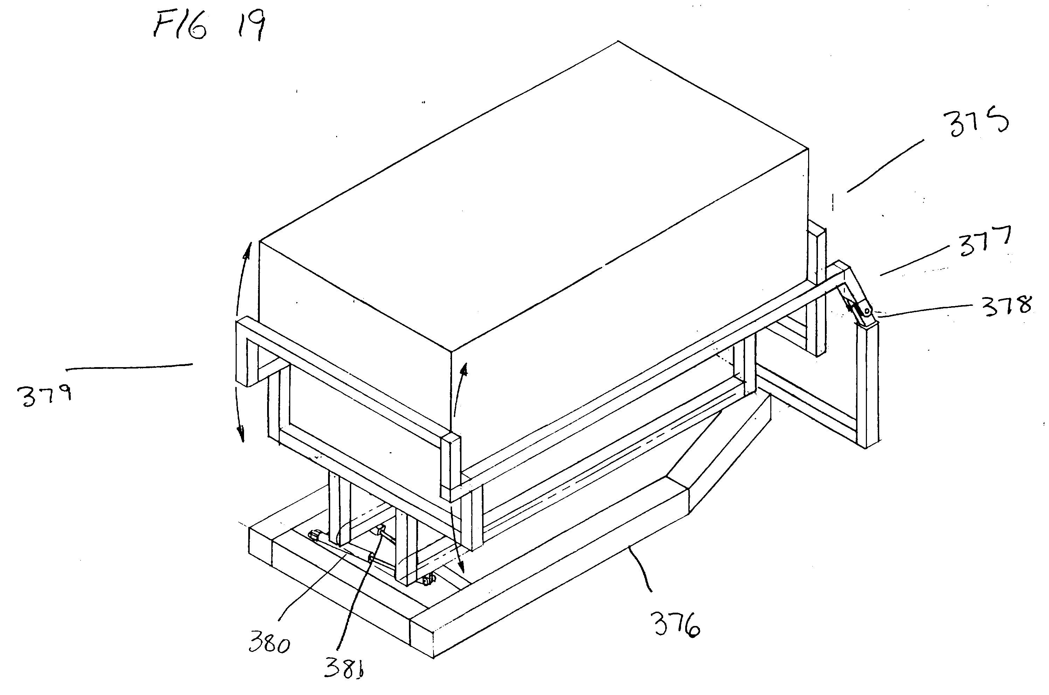

A frontal view of one embodiment of a drum support frame 360 is diagrammatically shown in FIG. 18. According to this embodiment, the drum 361 is located within the drum support frame 360. Mounted on the front of the drum support frame at two locations on each side of the drum are drive wheels 362,363 mounted on hydraulic motors for rotationally driving the drum 361. Two additional drive wheels 158, 159 with drive motors 163, 164 can be seen at the rear of the drum support frame in FIG. 12. Also, on each side of the front end of the drum support frame are included pivot points 364,365 which allows the rear of the drum support frame to pivot up and down. This provides for tilting (raising and lowering) the egress end of the drum. Referring to FIG. 12, in one embodiment, the egress end of the drum 160 may be raised and lowered through use of hydraulic cylinders. According to one embodiment, two hydraulic cylinders are used 161, 162. A first end of each hydraulic cylinder is mounted to the chassis (not visible), and a second end of each hydraulic cylinder 165, 166 is mounted to the bottom aspect of the drum support frame 165, 166. In one preferred embodiment, a pendulum switch is mounted on the chassis and connected to a pressure control system for operation of the hydraulic cylinders. According to this arrangement, the angulation of the rotational axis of the drum can be set and the drum will automatically remain at the same relative tilt angle regardless of field angulation. In one preferred embodiment, the drum support frame can pivot to provide a rotational axis tilt of the drum of up to12 degrees on either side of horizontal.

A diagrammatic illustration of a drum support frame is shown in FIG. 19. The drum support frame 375 is an integral part of the rear clip of the chassis 376. The front end of the drum support frame 377 includes a pivot arrangement 378 around which the back (egress) end of the drum support frame 379 can pivot. The drum support frame can be raised and lowered to a pre-set angle by use of a pressure control system, hydraulic cylinder 380, 381 and pendulum switch.

It will be apparent to one of ordinary skill in the art that many changes and modifications can be made without departing from the spirit or scope of the invention.

## Claims

1. A two stage threshing arrangement comprising a first stage threshing apparatus, and a second stage threshing apparatus, at least one of the first and second stage threshing apparatuses comprising:
(i) a first threshing member (51, 71, 102) having a first threshing surface and a second threshing member (56, 72, 101) having a second threshing surface;
(ii) a threshing chamber between said first and second threshing surfaces wherein said first and second threshing surfaces exert a compressive force on said legume plant material moving through said threshing chamber;
(iii) a pressure control system for selectively controlling the compressive force exerted by said first and second threshing surfaces on said legume plant material moving through said threshing chamber;
(iv) a driving arrangement for selectively driving said first and said second threshing surfaces; and
(v) a drive speed control system for selectively controlling the drive speed of said first threshing surface at a first speed relative to said threshing chamber and said second threshing surface at a second speed relative to said threshing chamber;
wherein when said legume plant material moves through said threshing chamber said first and second threshing surfaces exert sufficient pressure on said legume plant material to open pods contained in said plant material.

2. A threshing arrangement according to claim 1, wherein said first threshing surface and said second threshing surface are driven in the same direction relative to each other.

3. A threshing arrangement according to claim 1 or 2 wherein:
(a) said first threshing member is a cylindrical drum (102) with a perforated cylindrical wall and having an internal surface defining said first threshing surface; and
(b) said second threshing member is a cylindrical rotor (101) having an external surface defining said second threshing surface, said second threshing member being mounted within said first threshing member.

4. A threshing arrangement according to claim 3, wherein said first threshing member (102) has a rotational axis (104), and said second threshing member (101) has a rotational axis (103) and said rotational axis of said first threshing member is not concentric with said rotational axis of said second threshing member.

5. A threshing arrangement according to claim 3 or 4, wherein said second threshing member (101) is mounted by a mounting arrangement (151) which permits said second threshing surface to move towards and away from said first threshing surface (102).

6. A threshing arrangement according to claim 5 wherein said mounting arrangement includes at least one hydraulic cylinder (253).

7. A threshing arrangement according to claim 6 wherein said mounting arrangement (151) is configured and arranged to exert a substantially constant compressive force on legume plant material in said threshing chamber during operation.

8. A threshing arrangement according to any preceding claim, wherein said pressure control system is hydraulically operated.

9. A threshing arrangement according to claim 1 or 2 wherein;
(a) said first threshing member is a cylindrical rotor (51) having an external surface, said external surface defining said first threshing surface; and
(b) said second threshing member is a conveyor belt system (56) including a conveyor belt (57), said conveyor belt defining said second threshing surface.

10. A threshing apparatus according to claim 1 or 2 wherein:
(a) said first threshing member is a first conveyor belt system (71) including a first conveyor belt, said first conveyor belt defining said first threshing surface; and
(b) said second threshing member is a second conveyor belt system (72) including a second conveyor belt, said second conveyor belt defining said second threshing surface.

11. A threshing arrangement according to claim 10, wherein said first conveyor belt system is mounted with a mounting arrangement (83) which allows said first threshing surface to move towards and away from said second threshing surface during operation.

12. A threshing arrangement according to claim 11 wherein said mounting arrangement is configured and arranged to exert a substantially constant compressive force on legume plant material in said threshing chamber during operation.

13. A threshing arrangement according to claim 11 or 12, wherein said mounting arrangement includes at least one hydraulic cylinder (84).

14. A threshing arrangement according to claim 1, wherein said second threshing apparatus comprising:
(a) a first threshing member (51, 71, 102) having a first threshing surface and a second threshing member (56,72, 101) having a second threshing surface; and
(b) a threshing chamber positioned between said first and second threshing surfaces and constructed and arranged to receive the legume plant therein during operation, said first and second threshing surfaces configured and arranged to exert a compressive force on legume plant material received in said threshing chamber during operation.

15. A threshing arrangement according to claim 14 including a first threshing apparatus wherein:
(a) said first threshing member is a first conveyor belt system (71) including a first conveyor belt, said first conveyor belt defining said first threshing surface; and
(b) said second threshing member is a second conveyor belt system (72) including a second conveyor belt, said second conveyor belt defining said second threshing surface; and
a second threshing apparatus wherein:
(a) said first threshing member is a cylindrical drum (102) with a perforated cylindrical wall and having an internal surface defining said first threshing surface; and
(b) said second threshing member is a cylindrical rotor (101) having an external surface defining said second threshing surface, said second threshing member being mounted within said first threshing member.

16. A threshing arrangement according to any preceding claim, further comprising a gathering arrangement (2).

17. A threshing arrangement according to claim 16, wherein said gathering arrangement (2) includes:
(a) a picking reel (15) having a cylindrical body, said cylindrical body including an external surface;
(b) at least one longitudinally extending blade (22) protruding radially from said external surface of said cylindrical body; and
(c) at least one finger (27) attached to said longitudinally extending blade.

18. A harvester for harvesting legume plant material, said harvester comprising a gathering arrangement (2) and a two stage threshing arrangement according to any of claims 1 to 15.

19. A harvester for harvesting legume plant material, said harvester comprising a gathering arrangement (2) and a two stage threshing arrangement, said two stage threshing arrangement including:
(a) a first stage threshing apparatus; and
(b) a second stage threshing apparatus.

20. A harvester according to claim 19, wherein said second stage threshing apparatus comprises:
(a) a first threshing member (51, 71, 102) having a first threshing surface and a second threshing member (56,72,101) having a second threshing surface; and
(b) a threshing chamber positioned between said first and second threshing surfaces and constructed and arranged to receive the legume plant therein during operation, said first and second threshing surfaces configured and arranged to exert a compressive force on legume plant material received in said threshing chamber during operation.

21. A harvester according to any of claims 18 to 20, wherein said harvester is self propelled.

22. A harvester according to any of claims 18 to 21, wherein said gathering arrangement (2) includes:
(a) a picking reel (15) having a cylindrical body, said cylindrical body including an external surface;
(b) at least one longitudinally extending blade (22) protruding radially from said external surface of said cylindrical body; and
(c) at least one finger (27) attached to said longitudinally extending blade.

23. A gathering arrangement (2) for picking up a crop from the field, said gathering arrangement comprising:
(a) a picking reel (15) having a cylindrical body, said cylindrical body including an external surface;
(b) at least one longitudinally extending blade (22) protruding radially from said external surface of said cylindrical body; and
(c) at least one finger (27) attached to said longitudinally extending blade.

24. A gathering arrangement (2) according to claim 23, further comprising:
(a) a picking reel cover (4); and
(b) a ground roller.

25. A gathering arrangement (2) according to claim 23 or 24 comprising:
(a) at least six longitudinally extending blades (22) protruding radially from the surface of the cylindrical body; and
(b) a plurality of fingers (27) attached to each longitudinally extending blade (22).

26. A gathering arrangement according to any of claims 23 to 25, further including a finger mounting plate (25).

27. A gathering arrangement according to any of claims 23 to 26, wherein said finger (27) is mounted perpendicular relative to said blade (22).

28. A method for opening legume pods wherein greater than 40% of the pods are opened by compressive forces.
